# FASCICULE DE BREVET EUROPEEN

(11) **EP 1 697 268 B1**
(45) Date de publication et mention de la délivrance du brevet: **18.04.2007**
(21) Numéro de dépôt: 03799670.9
(22) Date de dépôt: 19.12.2003
(51) Int. Cl.: C03C 8/18, C03C 17/00, C03C 17/36

(54) **PROCEDE DE FABRICATION DE MOTIFS ELECTROCONDUCTEURS SUR UN SUBSTRAT TRANSPARENT ET SUBSTRAT OBTENU**
VERFAHREN ZUR HERSTELLUNG VON ELEKTRISCH LEITENDEN MUSTERN AUF EINEM TRANSPARENTEM SUBSTRAT UND DADURCH ERHALTENES SUBSTRAT
METHOD FOR PRODUCING ELECTROCONDUCTIVE PATTERNS ON A TRANSPARENT SUBSTRATE AND THE THUS OBTAINABLE SUBSTRATE

(43) Date de publication de la demande: 06.09.2006
(73) Titulaire: SAINT-GOBAIN GLASS FRANCE, 92400 Courbevoie (FR)
(72) Inventeur: BEYRLE, André, F-60170 Tracy le Val (FR)
(74) Mandataire: Jamet, Vincent
(86) Numéro de dépôt international: PCT/FR2003/003845
(87) Numéro de publication internationale: WO 2005/068385

(56) Documents cités:
- EP-A- 0 712 814
- EP-A- 0 761 617
- WO-A-02/102732
- DE-A- 10 246 840
- DE-U- 20 304 806
- US-A- 4 623 582
- US-A- 4 975 301
- US-A- 5 350 718
- US-A- 5 796 071
- US-A- 6 057 037
- PATENT ABSTRACTS OF JAPAN vol. 2000, no. 19, 5 juin 2001 (2001-06-05) & JP 2001 035393 A (CENTRAL GLASS CO LTD), 9 février 2001 (2001-02-09)

## Description

L'invention se rapporte à un procédé de fabrication de motifs électroconducteurs sur un substrat transparent et au substrat transparent pourvu desdits motifs.

Il est bien connu d'utiliser des émaux sur des substrats transparents tels que des vitrages automobiles ou pour le bâtiment pour former des inscriptions et des motifs décoratifs, des couches conductrices et des couches protectrices. Ainsi, dans le domaine de l'automobile, on a largement recours aux émaux pour réaliser des circuits chauffants et des antennes de réception radio, pour imprimer des motifs permettant de protéger l'adhésif servant au montage des vitrages dans les baies de carrosserie des effets néfastes du rayonnement solaire et de masquer les bandes collectrices des réseaux chauffants, ou encore pour former des décorations.

Depuis plusieurs années déjà, les constructeurs de véhicules automobiles cherchent à équiper les vitrages de dispositifs conducteurs de l'électricité de toutes sortes pouvant servir par exemple d'éléments de chauffage, d'antenne, d'alarme ou de commandes d'ouverture et de fermeture de diverses parties du véhicule. Certains modèles de véhicules de type break sont équipés d'une lunette arrière mobile que l'on peut ouvrir largement pour faciliter le chargement. Ceci s'avère très commode pour transporter des objets de grande longueur car ainsi le véhicule peut se déplacer avec le hayon en position fermé, les conditions de sécurité étant meilleures du fait que seule la partie correspondant à la lunette est en position d'ouverture.

L'ouverture de la lunette s'effectue au moyen d'un circuit électrique placé sur le vitrage qui est commandé de l'intérieur de l'habitacle. Le circuit est composé de fils métalliques fins ou de pistes électroconductrices formées par sérigraphie sur la face interne du vitrage au voisinage d'un joint périphérique assurant l'étanchéité entre le verre et la tôle de la baie de carrosserie. Généralement, la lunette est pourvue d'une bande émaillée de couleur foncée, le plus souvent noire, formant une bordure qui sert à dissimuler les éléments inesthétiques tels que les moyens de fixation dans la baie de carrosserie (essentiellement une couche ou un cordon d'adhésif) et les amenées de courant du réseau chauffant.

Pour des raisons d'encombrement et aussi pour éviter qu'il ne soit visible, il arrive qu'il n'y ait pas d'autre alternative que de disposer le circuit électrique d'ouverture de la lunette à l'extérieur du joint d'étanchéité, sur la surface s'étendant entre le bord du vitrage et la face externe du joint. Non protégé, le circuit se trouve exposé aux intempéries, et plus particulièrement à l'action des eaux chargées en sels du type NaCl qui interfèrent avec les particules électroconductrices. L'intégrité du circuit est altérée : lorsque le passage du courant électrique n'est plus possible, la lunette ne s'ouvre plus, ou encore des courts-circuits peuvent survenir ou alors la lunette s'ouvre de manière intempestive.

Une solution proposée pour remédier aux inconvénients précités consiste à appliquer un ruban adhésif aux endroits du circuit les plus sensibles à la rupture ou de court-circuit du réseau électrique. Outre l'aspect peu esthétique, il s'avère que le ruban a une durée de vie limitée : il a tendance à se décoller rapidement en divers endroits créant des zones où l'eau s'évacue difficilement voire stagne, ce qui contribue à augmenter le risque de rupture du circuit. En outre, l'application du ruban sur le substrat étant faite manuellement, l'incidence sur le coût final n'est pas négligeable.

Le but de la présente invention est de proposer un procédé permettant d'obtenir un substrat transparent, notamment un vitrage en verre de sécurité trempé ou feuilleté pouvant avantageusement être utilisé comme lunette arrière ouvrante, pourvu de motifs électriquement conducteurs présentant une meilleure résistance à la corrosion en milieu salin, et donc une plus grande fiabilité dans la fonction d'ouverture.

Ce but est atteint par le procédé de l'invention qui consiste à
- former un motif électroconducteur au moyen d'une pâte conductrice contenant des particules métalliques sur un substrat transparent,
- déposer sur le motif au moins une couche d'une composition d'émail comprenant un flux vitreux et moins de 20 % en poids de pigments, et
- soumettre le substrat à un traitement thermique de façon à cuire l'émail.

Un autre objet de la présente invention concerne le substrat obtenu par le procédé précité

Un autre objet de la présente invention concerne encore l'utilisation du substrat précité en tant vitrage automobile, en particulier en tant que lunette arrière ouvrante.

Dans la présente invention, les termes et expressions suivants ont la signification donnée ci-après :
- « émail » signifie aussi bien la composition ou pâte d'émail apte à être déposée sur le substrat que la couche d'émail présente sur le substrat aux différentes étapes du procédé permettant l'obtention du substrat portant le motif conducteur émaillé,
- « flux vitreux » s'entend d'une composition vitrifiable, de préférence substantiellement transparente, se présentant sous la forme d'une poudre à base d'oxydes,
- « température de cuisson » ou « température de fusion » s'entend de la température à laquelle le flux vitreux est suffisamment fondu pour s'accrocher au substrat sur lequel il est déposé et former une matrice vitreuse imperméable. Cette température correspond à la température minimale à laquelle le flux vitreux présente un frittage suffisant se traduisant par une disparition de l'effet de capillarité. En pratique, cela consiste pour un homme du métier à déterminer la température à laquelle la composition vitrifiable déposée sur un substrat transparent doit être cuite de manière à former une couche de porosité telle qu'un liquide ne puisse pas la traverser. La température de cuisson ou de fusion de l'émail est de préférence inférieure à la température imposée par les traitements de transformation ultérieure du substrat. En règle générale, les conditions thermiques sont adaptées de manière à ce que la température du substrat demeure inférieure à environ 700°C.

Il convient de noter que l'invention a ceci de remarquable qu'elle met en oeuvre une composition d'émail comprenant un flux vitreux qui forme après la cuisson une matrice vitreuse fortement densifiée. En limitant la teneur en pigments à 20 % dans le flux, on peut ainsi obtenir une matrice vitreuse pratiquement exempte de porosité ouverte qui protège efficacement les particules métalliques contenues dans le motif électroconducteur sous-jacent de l'action corrosive des sels présents dans le milieu ambiant.

Le nombre de motifs à réaliser sur le substrat, leur taille et leur forme varient largement selon les modèles de véhicules.

De préférence, comme il sera détaillé plus loin, les motifs sont imprimés sur le substrat par sérigraphie au moyen d'un écran sur lequel est reproduit le motif souhaité et d'une pâte adaptée à cet usage. La reproduction du motif sur l'écran peut par exemple être réalisée par la technique classique utilisant une émulsion photographique et un masque approprié.

Le motif électroconducteur peut être déposé directement sur le substrat ou sur une couche intermédiaire revêtant tout ou partie de sa surface.

Dans la présente invention, on s'intéresse plus particulièrement aux substrats, notamment en verre, qui sont destinés à être montés dans la baie de carrosserie sans l'intervention d'un cadre d'aucune sorte et sont disposés de manière que le verre affleure la tôle. En général, ce type de substrat comporte une bande périphérique, souvent émaillée, de largeur variable qui a pour fonction de masquer de l'extérieur les éléments indispensables au maintien en place du substrat et à son bon fonctionnement Ces éléments de maintien peuvent être par exemple un cordon d'adhésif lorsque le montage est effectué par collage, ou bien un dispositif de commande d'ouverture et de fermeture à distance, et l'étanchéité avec le verre étant alors réalisée en disposant dans la baie de carrosserie un joint fait d'une matière compressible adaptée, par exemple du caoutchouc ou de l'EPDM.

De manière générale, on commence par former la bande périphérique en déposant sur la surface du verre une couche intermédiaire d'un émail coloré, le plus souvent noir, sur la surface du verre, puis on réalise le motif électroconducteur. La bande périphérique et le motif électroconducteur peuvent par exemple être appliqués sérigraphie.

Sur le motif électroconducteur, on applique ensuite l'émail protecteur. Le motif adopté pour l'application de l'émail est très proche du motif à protéger et il est généralement légèrement plus grand de manière à former une couche protectrice qui d'étend au-delà des bords du motif. L'épaisseur de la couche d'émail est adaptée à celle du motif électroconducteur à protéger et elle doit être suffisante pour le recouvrir intégralement.

Lorsque le substrat comprend la couche intermédiaire d'émail noir décrite plus haut, il est avantageux d'appliquer l'émail protecteur de manière à recouvrir la bordure extérieure de la bande périphérique qui, n'étant pas protégée par le joint, se trouve directement exposée aux intempéries. La protection au niveau de l'épaisseur permet notamment de préserver la bande d'un effet de corrosion latérale.

Le substrat peut en outre comprendre une couche supplémentaire d'un émail ayant des propriétés particulières de coloration et/ou anti-adhésives. Par exemple, il peut s'agir d'un émail coloré, notamment noir, opaque aux particules métalliques entrant dans la constitution du circuit électrique, ou d'un émail comprenant une fritte de verre ayant une température de fusion élevée qui évite le collage du vitrage avec les organes de formage du substrat.

La pâte conductrice utile pour former le motif électroconducteur renferme des particules métalliques aptes à conduire le courant électrique, au moins une fritte de verre permettant l'accrochage des particules métalliques sur le substrat et un médium permettant de régler la viscosité de la pâte.

Les particules métalliques peuvent être choisies parmi les particules d'argent, d'aluminium, de nickel, de zinc, de cuivre, de graphite, d'or, de platine, de palladium, de rhodium et les mélanges de ces particules. Les particules d'argent sont préférées car elles présentent un rapport conductivité/coût avantageux.

Les particules métalliques représentent généralement 30 à 88 % du poids de la pâte conductrice, de préférence 65 à 80 %.

La fritte de verre entrant dans la constitution de la pâte peut être toute fritte connue dans le domaine, par exemple une fritte borosilicate à base de bismuth, de zinc ou de plomb ou un mélange de ces frittes. Elle représente généralement 1 à 8 % du poids de la pâte conductrice, de préférence de l'ordre de 2 % (fritte renfermant du plomb) à environ 58 % (fritte renfermant du bismuth ou du zinc).

Comme cela a déjà été mentionné, le médium a pour rôle de régler la viscosité de la pâte et d'améliorer l'adhésion sur le verre ou sur la couche intermédiaire d'émail. Il est généralement éliminé par séchage avant la cuisson de l'émail et de ce fait il n'est pas présent dans le motif électroconducteur final.

Le médium est généralement choisi parmi les solvants organiques tels que l'huile de pin, les terpènes, les huiles minérales, les diluants et les résines, notamment cellulosiques, ou les composés susceptibles de réticuler sous un rayonnement ultraviolet. Le médium représente généralement 11 à 69 % en poids de la pâte conductrice.

La composition d'émail conforme à l'invention comprend comme indiqué précédemment un flux vitreux et moins de 20 % en poids de pigments. De préférence, la teneur en pigments est inférieure ou égale à 15 %, et de manière particulièrement préférée inférieure ou égale à 1 %.

Le flux vitreux est destiné à former finalement une matrice vitreuse de protection du motif électroconducteur, et il est compatible avec le substrat transparent sur lequel il peut être éventuellement appliqué. De préférence, le flux vitreux est apte à former une matrice pouvant supporter les températures requises pour les opérations de transformation du substrat comme indiqué plus haut.

Le flux vitreux est un mélange vitrifiable comprenant des oxydes essentiels à la formation du réseau vitreux et des oxydes modificateurs permettant d'ajuster le point de fusion et des oxydes intermédiaires qui selon l'environnement jouent le rôle d'oxydes formateurs et/ou d'oxydes modificateurs. A titre d'exemple, on peut citer les oxydes de silicium, de zinc, de bismuth, de sodium, de bore, de lithium, de potassium, de calcium, d'aluminium, de magnésium, de baryum, de strontium, d'antimoine et de plomb.

Le flux vitreux comprend les oxydes suivants, en pourcentage pondéral:

| | |
|---|---|
| SiO₂ | 15-50% |
| Bi₂O₃ | 0-70% |
| B₂O₃ | 10-60% |
| Na₂O+K₂O | 1-10% |
| ZnO | 0 - 30 % et de préférence < 0,1 % |
| Al₂P₃ | 1-10% |
| Impuretés | <1% |

Le flux vitreux ayant la composition ci-dessus peut comprendre une faible proportion (moins de 1 % en poids) d'impuretés inévitables apportées essentiellement par les matières premières vitrifiables. Celles-ci sont présentes sous la forme d'oxydes de Ca, Ba, Sr, V, Zr, Mn, Mo et de phosphate.

De préférence, pour des raisons liées essentiellement au recyclage, le flux vitreux comprend moins de 0,1 % en poids d'oxydes de plomb et mieux encore n'en contient pas.

Conformément à l'invention, la composition d'émail peut contenir jusqu'à 20 % en poids de pigments. Ces pigments sont des oxydes de nickel, de titane, de manganèse, de chrome, de cuivre, de fer et de cobalt. Si les pigments à base de nickel, de titane et de manganèse peuvent être utilisés sous la forme d'oxyde, en revanche les autres oxydes sont généralement soumis à une étape de calcination visant à obtenir les chromates correspondants de fer, de cuivre et/ou de cobalt sous forme de spinelles.

De manière classique, il est usuel d'ajouter à la composition d'émail, généralement sous forme de poudre, un médium qui a pour fonction d'assurer la mise en suspension correcte des particules solides et l'adhésion temporaire de l'émail sur le substrat portant les couches précitées. Le médium est le plus souvent éliminé par séchage avant la cuisson de l'émail et par conséquent il n'est pas présent dans l'émail final.

Ce médium peut être choisi parmi les composés décrits précédemment pour la préparation de la pâte électroconductrice. La quantité de médium présent dans l'émail peut varier dans une large mesure en fonction de la méthode d'application choisie. En général 15 à 40 % en poids de médium dans l'émail suffisent à obtenir la consistance pâteuse nécessaire à la plupart des applications.

La pâte d'émail peut être appliquée par pulvérisation, par enduction au rouleau ou au rideau ou par sérigraphie. L'application par sérigraphie est préférée car elle permet en agissant sur les paramètres du tamis (maillage, épaisseur, ...) et les conditions d'application (vitesse, dureté de la racle, ...) d'obtenir des motifs d'épaisseur et de forme variée de manière rapide, reproductible et peu coûteuse. Ce mode d'application permet notamment de déposer l'émail en couches d'épaisseur pouvant varier de 30 µm à 100 µm, et de préférence jusqu'à 50 µm.

Préférentiellement après l'application de l'émail, on soumet le substrat à un séchage à une température relativement basse afin d'éliminer le médium, ce qui a pour effet de fixer l'émail autorisant ainsi les manipulations sans risque d'endommagement jusqu'à l'étape ultime de cuisson. Cette température demeure inférieure à la température de ramollissement du substrat, ceci afin de prévenir toute déformation du verre pouvant engendrer des défauts optiques inacceptables pour des vitrages automobiles. En général, on opère à une température inférieure à 300°C, et de préférence de l'ordre de 100°C. On peut pour cela utiliser tout moyen connu, par exemple des radiations infrarouges ou micro-ondes. Le plus souvent, on obtient un niveau de protection satisfaisant en procédant à l'application d'une seule couche d'émail. Il est néanmoins possible de déposer plusieurs couches d'émail et obtenir ainsi une épaisseur d'émail plus importante sur le substrat final permettant ainsi son utilisation dans des environnements salins plus agressifs. Pour des raisons liées au coût du séchage, on préfère cependant traiter thermiquement le substrat une seule fois après que toutes les couches ont été déposées

Le substrat est alors soumis à une étape de cuisson en vue d'obtenir la fusion de la fritte de verre et sa transformation en une couche protectrice de matrice vitreuse. La cuisson s'effectue de préférence pendant le traitement thermique lié au type de vitrage que l'on souhaite obtenir. Il peut s'agir d'un bombage pour un vitrage feuilleté formé de deux feuilles de verre séparées par une feuille de matière plastique transparente telle que du PVB, ou d'une trempe pour un vitrage monolithique. Comme indiqué plus haut, le bombage et/ou la trempe du substrat est mis en oeuvre dans des conditions thermiques telles que la température du substrat n'excède pas 700°C.

L'opération de bombage est effectuée selon des méthodes connues en soi à une température généralement de l'ordre de 560 à 640°C, de préférence environ 580 à 620°C, cette température étant atteinte après un temps n'excédant pas préférentiellement une dizaine de minutes. Le bombage peut être réalisé par gravité, comme c'est le cas notamment des substrats en verre bombés par paire dans la réalisation de verres feuilletés, ou à l'aide de matrices. De préférence, on dispose le motif électroconducteur revêtu de l'émail protecteur sur la face dirigée vers l'habitacle lorsque le vitrage est monté dans le véhicule (face 4).

L'opération de trempe, mise en oeuvre notamment pour former les vitrages monolithiques, est effectuée selon des méthodes connues en soi à une température généralement de l'ordre de 640 à 680°C pendant une durée n'excédant pas quelques minutes. Lorsque le substrat est bombé et trempé, la trempe peut être mise en oeuvre après le bombage du substrat, éventuellement dans un même dispositif.

Grâce à l'invention, des motifs conducteurs appliqués sur le substrat ont une résistance améliorée aux conditions atmosphériques sévères, notamment en milieu salon (NaCl) comme cela est démontré dans les exemples suivants qui illustrent l'invention, ces exemples étant illustrés par les figures ci-après :
- la figure 1 est une représentation schématique vue de dessous d'une lunette arrière ouvrante, et
- la figure 2 est une vue en coupe de la lunette en position fermée dans la baie de carrosserie.

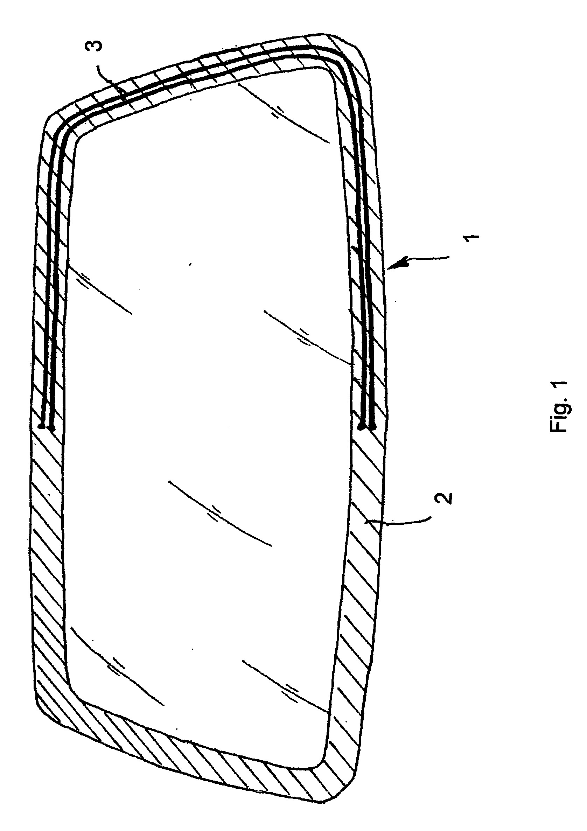

Dans la figure 1, il est représenté une lunette arrière chauffante comprenant une feuille de verre (1) munie d'une bande périphérique (2) opaque et colorée sur laquelle est imprimé un motif électroconducteur (3). Par souci de clarté, le réseau de fils chauffants n'est pas représenté.

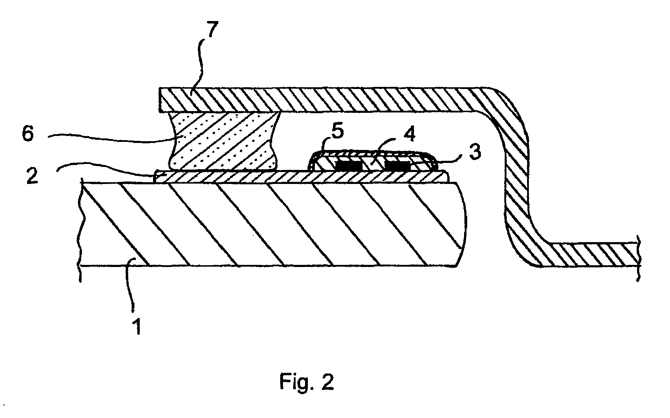

La figure 2 est une représentation schématique vue en coupe de la lunette de la figure 1 dans sa destination finale, montée sur le véhicule. La lunette comprend une feuille de verre (1) revêtue d'une couche d'émail (2) opaque et coloré sur laquelle est imprimé le motif conducteur (3) sous la forme de deux bandes de largeur sensiblement égale. Le motif (3) est protégé par une couche d'émail (4), elle-même revêtue d'une couche d'émail (5) coloré ayant des propriétés anti-adhésives. Un joint (6) porté par la baie de carrosserie (7) comprimé par la lunette au niveau de la couche (2) assure l'étanchéité.

### EXEMPLE 1

On décrit ci-après la fabrication d'un vitrage en vue d'une utilisation en tant que lunette arrière à ouverture électrique d'un véhicule automobile selon les figures 1 et 2.

Sur un substrat (1) en verre de 4 mm d'épaisseur, on imprime une bande périphérique continue (2) de d'environ 80 mm de largeur en utilisant une pâte d'émail noir classique et un écran de sérigraphie. La bande a une épaisseur de l'ordre de 30 à 35 µm et elle s'étend jusqu'au bord extérieur de la feuille de verre.

Après séchage à 120°C pendant 1 à 2 minutes, sur la moitié de bande située à droite du substrat on imprime le circuit électrique (3) en utilisant une pâte électroconductrice et un écran de sérigraphie. La pâte renferme 78 % en poids de particules d'argent, 4 % de fritte de verre et 18 % d'un médium (résine + solvant). Les fils sérigraphiés ont une largeur moyenne de 0,7 mm et une épaisseur 25 µm.

Après séchage dans les conditions précitées, on dépose sur le circuit électrique, par sérigraphie une couche (4) d'émail protecteur de 30 à 35 µm d'épaisseur au moyen d'un écran. L'émail est constitué d'un flux vitreux de type borosilicate de bismuth et de zinc (le bismuth étant majoritaire au regard du zinc) et renfermant 15 % de pigments à base de Ti, Cr et Cu.

Le substrat est soumis à un cycle de cuisson (de la température ambiante à 650°C en 190 secondes) visant à obtenir à la fois la cuisson des compositions d'émail et la trempe du verre.

On soumet le vitrage émaillé à un test de vieillissement accéléré dans les conditions suivantes : on introduit le vitrage dans une enceinte reproduisant les conditions d'un brouillard salin tel que défini par la norme ISO 9227, on raccorde les extrémités du circuit aux bornes d'un générateur électrique (tension : 12 volts) et on mesure la durée de passage du courant avant la rupture du circuit. On observe que le passage du courant électrique est interrompu après 120 heures de fonctionnement.

### EXEMPLE 2 (COMPARATIF)

On procède dans les conditions de l'exemple 1 modifié en ce que la couche d'émail (4) est formée d'un émail noir, anti-adhésif et opaque à l'argent, comprenant un flux vitreux de type borosilicate de bismuth et de zinc (bismuth majoritaire par rapport au zinc) et 22 % de pigments à base de Cr, Ni, Fe et Mn.

Le passage du courant électrique est interrompu après 5 heures de fonctionnement.

### EXEMPLE 3

On procède dans les conditions de l'exemple 1 modifié en ce que l'on forme la couche (4) avec un autre émail et que, sur cette couche, on applique une couche supplémentaire (5) d'émail noir anti-adhésif de l'exemple 2, avant de procéder à la cuisson.

On forme la couche (4) par sérigraphie dans les conditions précitées en utilisant un émail comprenant un flux vitreux de type borosilicate de bismuth et environ 1 % de pigments à base de Ti, Cr et Fe.

Après séchage de la couche d'émail (4) dans les mêmes conditions que celles précédemment décrites, on applique sur cette couche par sérigraphie une couche (5) d'émail noir anti-adhésif de l'exemple 2 de 30 à 35 µm d'épaisseur au moyen d'un écran.

Le passage du courant électrique est interrompu après 500 heures de fonctionnement.

## Revendications

1. Procédé de fabrication de motifs électroconducteurs sur un substrat transparent, notamment en verre, qui consiste à:
- former un motif électroconducteur au moyen d'une pâte conductrice contenant des particules métalliques sur le substrat transparent,
- déposer sur le motif au moins une couche d'une composition d'émail comprenant un flux vitreux et moins de 20 % en poids de pigments, ledit flux vitreux comprenant, en pourcentage pondéral
| | |
|---|---|
| SiO₂ | 15-50% |
| Bi₂O₃ | 0-70% |
| B₂O₃ | 10-60% |
| Na₂O+K₂O | 1-10% |
| ZnO | 0 - 30 % et de préférence < 0.1 % |
| Al₂O₃ | 1-10% |
- et soumettre le substrat à un traitement thermique de façon à cuire l'émail.

2. Procédé selon la revendication 1, **caractérisé en ce que** la teneur en pigments est inférieure ou égale à 15 % en poids de la composition d'émail.

3. Procédé selon la revendication 2, **caractérisé en ce que** la teneur en pigments est inférieure ou égale à 1 % en poids.

4. Procédé selon l'une des revendications 1 à 3, **caractérisé en ce que** la pâte comprend des particules métalliques d'argent, d'aluminium, de nickel, de zinc, de cuivre de graphite, d'or, de platine, de palladium et/ou de rhodium.

5. Procédé selon la revendication 4, **caractérise en ce que** les particules sont en argent

6. Procédé selon l'une des revendications 1 à 5, **caractérisé en ce que** la couche d'émail a une épaisseur variant de 30 à 100 µm, et de préférence jusqu'à 50 µm.

7. Procédé selon l'une des revendications 1 à 6, **caractérisé en ce que** le flux comprend moins de 0,1 % d'oxydes de plomb.

8. Procédé selon l'une des revendications 1 à 7, **caractérisé en ce que** la cuisson est opérée à une température inférieure à 700°C.

9. Procédé selon l'une des revendications 1 à 8, **caractérisé en ce qu'**il comprend en outre une étape consistant à déposer une couche intermédiaire d'émail sur le substrat avant l'application du motif électroconducteur.

10. Procédé selon l'une des revendications 1 à 9, **caractérisé en ce qu'**il comprend en outre une étape consistant à déposer sur la ou les couches d'émail une couche d'un émail coloré et/ou ayant des propriétés anti-adhésives avant la cuisson.

11. Substrat transparent, notamment en verre, obtenu selon le procédé selon l'une des revendications 1 à 10.

12. Substrat selon la revendication 11, **caractérisé en ce** le motif électroconducteur présente une résistance en milieu salin au moins égale à 120 heures mesurée dans les conditions de la norme ISO 9227.

13. Vitrage comprenant au moins un substrat selon l'une des revendications 11 ou 12.

14. Utilisation du substrat selon la revendication 11 ou 12 en tant que vitrage automobile feuilleté ou monolithique, notamment ouvrant.

15. Utilisation selon la revendication 14 en tant que une lunette arrière ouvrante.

## Claims

1. A process for manufacturing electrically conductive patterns on a transparent, especially glass, substrate, which consists in:
- forming an electrically conductive pattern by means of a conductive paste containing metal particles on the transparent substrate;
- depositing at least one layer of an enamel composition, comprising a glassy flux and less than 20% by weight of pigments, on the pattern, said glassy flux comprising, in percentages by weight:
| | |
|---|---|
| SiO₂ | 15-50% |
| Bi₂O₃ | 0-70% |
| B₂O₃ | 10-60% |
| Na₂O + K₂O | 1-10% |
| ZnO | 0-30% and preferably < 0.1% |
| Al₂O₃ | 1-10% |
- and subjecting the substrate to a heat treatment so as to bake the enamel.

2. The process as claimed in claim 1, **characterized in that** the pigment content is less than or equal to 15% by weight of the enamel composition.

3. The process as claimed in claim 2, **characterized in that** the pigment content is less than or equal to 1% by weight.

4. The process as claimed in one of claims 1 to 3, **characterized in that** the paste contains silver, aluminum, nickel, zinc, copper, graphite, gold, platinum, palladium and/or rhodium metal particles.

5. The process as claimed in claim 4, **characterized in that** the particles are silver particles.

6. The process as claimed in one of claims 1 to 5, **characterized in** the enamel layer has a thickness varying from 30 to 100 µm and preferably up to 50 µm.

7. The process as claimed in one of claims 1 to 6, **characterized in that** the flux contains less than 0.1% of lead oxides.

8. The process as claimed in one of claims 1 to 7, **characterized in that** the baking is carried out at a temperature below 700°c.

9. The process as claimed in one of claims 1 to 8, **characterized in that** it furthermore includes a step consisting in depositing an enamel interlayer on the substrate before the electrically conductive pattern is applied.

10. The process as claimed in one of claims 1 to 9, **characterized in that** it furthermore includes a step consisting in depositing, on the enamel layer or layers, a layer of an enamel that is colored and/or has non-stick properties before the baking.

11. A transparent, especially glass, substrate obtained according to the process as claimed in one of claims 1 to 10.

12. The substrate as claimed in claim 11, **characterized in that** the electrically conductive pattern has a resistance in a salt environment measured under the conditions of the ISO 9227 standard of at least 120 hours.

13. A window comprising at least one substrate as claimed in either of claims 11 and 12.

14. The use of the substrate as claimed in claim 11 or 12 as a laminated or monolithic automobile window, especially an opening window.

15. The use as claimed in claim 14 as an opening rear window.

## Patentansprüche

1. Verfahren zur Herstellung elektrisch leitfähiger Muster auf einem insbesondere aus Glas bestehenden transparenten Substrat, welches darin besteht:
- ein elektrisch leitfähiges Muster mittels einer Metallteilchen enthaltenden leitfähigen Paste auf dem transparenten Substrat auszubilden,
- auf dem Muster wenigstens eine Schicht aus einer Emailzusammensetzung, die eine Glasfritte und weniger als 20 Gew.-% Pigmente umfasst, aufzubringen, wobei die Glasfritte in Gewichtsprozenten
| | |
|---|---|
| SiO₂ | 15 bis 50 % |
| Bi₂O₃ | 0 bis 70 % |
| B₂O₃ | 10 bis 60 % |
| Na₂O+K₂O | 1 bis 10 % |
| ZnO | 0 bis 30 %, vorzugsweise < 0,1 %, und |
| Al₂O₃ | 1 bis 10 % |
umfasst, und
- das Substrat einer Wärmebehandlung derart zu unterwerfen, dass das Email eingebrannt wird.

2. Verfahren nach Anspruch 1, **dadurch gekennzeichnet, dass** der Pigmentgehalt weniger als oder gleich 15 Gew.-% der Emailzusammensetzung beträgt.

3. Verfahren nach Anspruch 2, **dadurch gekennzeichnet, dass** der Pigmentgehalt weniger als oder gleich 1 Gew.-% beträgt.

4. Verfahren nach einem der Ansprüche 1 bis 3, **dadurch gekennzeichnet, dass** die Paste Metallteilchen aus Silber, Aluminium, Nickel, Zink, Kupfer, Graphit, Gold, Platin, Palladium und/oder Rhodium umfasst.

5. Verfahren nach Anspruch 4, **dadurch gekennzeichnet, dass** die Teilchen aus Silber bestehen.

6. Verfahren nach einem der Ansprüche 1 bis 5, **dadurch gekennzeichnet, dass** die Dicke der Emailschicht von 30 bis 100 µm und vorzugsweise bis 50 µm variiert.

7. Verfahren nach einem der Ansprüche 1 bis 6, **dadurch gekennzeichnet, dass** die Fritte weniger als 0,1 % Bleioxide enthält.

8. Verfahren nach einem der Ansprüche 1 bis 7, **dadurch gekennzeichnet, dass** das Einbrennen bei einer Temperatur von unter 700 °C durchgeführt wird.

9. Verfahren nach einem der Ansprüche 1 bis 8, **dadurch gekennzeichnet, dass** es außerdem eine Stufe umfasst, die darin besteht, auf das Substrat vor Aufbringen des elektrisch leitfähigen Musters eine Emailzwischenschicht aufzubringen.

10. Verfahren nach einem der Ansprüche 1 bis 9, **dadurch gekennzeichnet, dass** es weiterhin eine Stufe umfasst, die darin besteht, auf die Emailschicht(en) vor dem Einbrennen eine Emailschicht aufzubringen, die gefärbt ist und/oder Antihafteigenschaften besitzt.

11. Substrat, das transparent ist, insbesondere aus Glas besteht und gemäß dem Verfahren nach einem der Ansprüche 1 bis 10 erhalten worden ist.

12. Substrat nach Anspruch 11, **dadurch gekennzeichnet, dass** das elektrisch leitfähige Muster in der Salzsprühprüfung eine Beständigkeit besitzt, die, gemessen unter den Bedingungen der Norm ISO 9227, wenigstens 120 Stunden beträgt.

13. Verglasung, die mindestens ein Substrat nach Anspruch 11 oder 12 umfasst.

14. Verwendung des Substrates nach Anspruch 11 oder 12 als eine monolithische oder Verbundverglasung, die sich insbesondere öffnen lässt.

15. Verwendung nach Anspruch 14 als eine sich öffnen lassende Heckscheibe.
